# FASCICULE DE BREVET EUROPEEN

(11) **EP 0 532 403 B1**
(45) Date de publication et mention de la délivrance du brevet: **25.01.1995**
(21) Numéro de dépôt: 92402450.8
(22) Date de dépôt: 08.09.1992
(51) Int. Cl.: A01G 9/10, A01G 1/00

(54) **Procédé et installation de production industrielle de plantes en culture hors sol**
Verfahren und Vorrichtung zur industriellen Produktion erdloser Pflanzenkultur
Method and installation for industrial production of soilless culture plants

(30) Priorité: 09.09.1991 FR 9111122
(43) Date de publication de la demande: 17.03.1993
(73) Titulaire: CHAMOULAUD, Michel, 33700 Mérignac (FR)
(72) Inventeur: CHAMOULAUD, Michel, 33700 Mérignac (FR)
(74) Mandataire: Thévenet, Jean-Bruno

(56) Documents cités:
- FR-A- 1 304 693
- FR-A- 2 172 040
- FR-A- 2 372 589
- FR-A- 2 402 594

## Description

La présente invention a pour objet un procédé et une installation de production industrielle de plantes en culture hors sol, et concerne plus particulièrement la culture de plantes aromatiques ou végétaux qui ont un système radiculaire faiblement ramifié ainsi que de plantes devant être cultivées de manière espacée telles que des fleurs.

On connaît déjà des procédés de culture hors sol de plantes à l'aide de sacs dans lesquels on enferme un substrat choisi qui peut être enrichi par des solutions nutritives. La culture hors sol permet de mieux contrôler la croissance des plantes, d'améliorer leur qualité et de faciliter leur conditionnement. La culture hors sol traditionnelle réalisée en sacs préfabriqués implique un coût de production important.

On a par ailleurs déjà proposé, dans le document de brevet FR-A-2 372 589, de réaliser de façon industrielle des tapis de gazon qui sont produits hors sol sur des films en matière plastique étanches aux racines et peuvent être ensuite détachés des films en matières plastique, les racines du gazon formant elles-mêmes, avec le substrat, un tissu naturel qui assure la tenue mécanique du tapis de gazon.

Les plantes à système radiculaire faiblement ramifié telles que des plantes aromatiques, ou les plantes devant être cultivées de manière espacée et commercialisées jeunes telles que des fleurs ou des plants de tomates par exemple, ne permettent pas d'obtenir, comme le gazon, un tapis suffisamment solide pour être facilement manutentionné. Par ailleurs, la production de plantes individualisées ne permet pas d'épandre directement un mélange complet contenant un compost et des graines. Le procédé de culture du gazon en tapis n'est donc pas directement applicable à la culture hors sol des diverses plantes susceptibles d'être commercialisées.

La présente invention vise à remédier aux inconvénients susmentionnés et à permettre la culture industrielle hors sol de plantes ou fleurs devant être prélevées et commercialisées alors qu'elles présentent encore une certaine fragilité due à leur nature ou à leur croissance encore jeune.

La présente invention vise plus particulièrement à réaliser une culture hors sol selon un procédé qui peut facilement être mis en oeuvre de façon mécanisée de façon à réduire les coûts de production, tout en garantissant une bonne conservation et intégrité des plantes qui doivent être prélevées et conditionnées pour une commercialisation à grande échelle.

Ces buts sont atteints grâce à un procédé de production industrielle de plantes en culture hors sol, caractérisé en ce qu'il comprend les étapes suivantes :
1°) former en continu sur le sol un manchon renfermant un substrat de culture composé de particules calibrées en déposant en continu sur le sol successivement au moins un premier film en matière plastique étanche aux racines, une couche dudit substrat de culture d'épaisseur prédéterminée et de largeur inférieure à celle du premier film , et au moins un deuxième film de largeur supérieure à celle de la couche de substrat de culture, et en assurant en continu au fur et à mesure de la formation du manchon, la solidarisation, par collage ou soudage, des bords longitudinaux des premier et deuxième films,
2°) déposer sur le manchon un semis constitué de graines de semence ou de boutures et d'un substrat de culture supplémentaire fortement humidifié constituant une boue semi-liquide,
3°) laisser croître les plantes avec arrosage et apport éventuel de solutions nutritives,
4°) ramasser en plaques ou en rouleau le manchon de culture après croissance des plantes, et
5°) découper et conditionner des tronçons de manchon de culture contenant des plantes.

De façon plus particulière, selon un mode de réalisation préférentiel, lors de la formation du manchon on dépose sur le premier film en matière plastique étanche aux racines, avant le dépôt d'une couche de substrat de culture, un troisième film en non tissé à mailles fines perméable aux racines de largeur supérieure à celle de la couche de substrat de culture, et on assure en continu au fur et à mesure de la formation du manchon, la solidarisation par collage ou soudage des bords longitudinaux des deuxième et troisième films.

Dans ce cas, le deuxième film est en non tissé à mailles fines perméable aux racines et constitue avec le troisième film également en non tissé un manchon à l'intérieur duquel sont emprisonnées les particules du substrat de culture, mais qui peut être traversé par les racines des plantes.

La substrat de culture supplémentaire fortement humidifié peut être déposé en continu. Le substrat de culture supplémentaire constitue un milieu favorisant la germination. Il peut être éliminé en cours de culture ou à la récolte.

Selon un premier mode de réalisation possible, les graines de semence ou boutures sont prémélangées au substrat de culture supplémentaire avant épandage.

Selon un autre mode de réalisation possible, les graines de semence ou boutures sont déposées sur le manchon de façon séparée du substrat de culture supplémentaire avant ou après épandage de ce dernier.

Avantageusement, le premier film est un film en matière plastique perméable à l'eau tel qu'un film microperforé.

Pour des applications particulières, telles que la culture de plants de tomates, il est possible de réaliser en continu un manchon avec deux films en matière plastique. Dans ce cas, le deuxième film est un film en matière plastique dans lequel sont formés des orifices ou des fentes avant le dépôt du semis.

Le substrat de culture principal peut être avantageusement constitué de particules calibrées d'au moins l'une des matières suivantes : écorces broyées, tourbe, vermiculite, sciure de bois, terreau, laine de roche.

De préférence, le substrat de culture supplémentaire est constitué d'une tourbe à motte finement broyée et humidifiée avant l'épandage.

La couche de substrat de culture présente une épaisseur moyenne comprise entre environ 15mm et 50mm.

La couche de substrat de culture supplémentaire épandue à l'état semi-liquide présente une épaisseur moyenne comprise entre environ 2mm et 5mm.

Le procédé selon l'invention peut comprendre la formation simultanée de plusieurs bandes parallèles de la couche de substrat de culture supplémentaire écartées les unes des autres sur un manchon unique.

Dans ce cas, à titre d'exemple, la largeur d'une couche de substrat de culture est comprise entre environ 0,50m et 1,00m tandis que la largeur d'une couche de substrat de culture additionnel est comprise entre environ 6cm et 10cm.

Selon une autre caractéristique particulière, lors de l'étape de ramassage, le premier film en matière plastique est laissé en place tandis que le manchon constitué par les deuxième et troisième films en non tissé enserrant la couche de substrat de culture dans lequel ont pénétré les racines des plantes est ramassé en plaque ou rouleau.

Le procédé selon l'invention est applicable à la culture de diverses plantes semées ou bouturées, notamment une grande variété de fleurs semées telles que par exemples des pensées, des oeillets, des roses d'Inde, et des plantes aromatiques telles que le persil, le cerfeuil ou la ciboulette par exemple.

L'invention concerne également un procede tel que defini par la revendication 17
La totalité des opérations constituant le procédé selon l'invention peuvent être mises en oeuvre de façon mécanisée, ce qui permet d'obtenir des prix de revient de production au mètre carré beaucoup plus bas que dans le cas de méthodes traditionnelles ou dans le cas de cultures hors sol en sacs préfabriqués.

L'invention concerne ainsi également une installation pour la mise en oeuvre du procédé selon l'invention défini plus haut, caractérisée en ce qu'elle comprend une machine mobile comprenant un châssis monté sur des premier et deuxième rouleaux d'entraînement parallèles qui portent sur le sol et présentent le même diamètre, un premier moyen de support d'un rouleau d'un premier film, placé au voisinage du premier rouleau porteur d'entraînement, un second moyen de support d'un rouleau d'un deuxième film, placé au voisinage du second rouleau porteur d'entraînement, une trémie d'alimentation disposée entre les premier et second rouleaux porteurs d'entraînement pour l'alimentation en substrat de culture principal, des moyens synchronisés avec l'avancement des premier et second rouleaux porteurs d'entraînement pour épandre de façon régulée le substrat de culture principal contenu dans la trémie d'alimentation, des premier et deuxième rouleaux plombeurs pouvant être mis en contact avec la sol respectivement derrière les premier et deuxième rouleaux porteurs d'entraînement, pour appliquer sur le sol lesdits premier et deuxième films, un dispositif de scellage disposé au voisinage du deuxième rouleau plombeur pour solidariser les bords longitudinaux des premier et deuxième films appliqués sur le sol, et un dispositif de semis disposé au voisinage du deuxième rouleau plombeur pour déposer sur le sol à l'arrière de celui-ci à la fois des graines de semence ou des boutures et un substrat de culture additionnel semi-liquide.

L'installation comprend en outre un troisième moyen de support d'un rouleau d'un troisième film, placé au voisinage dudit premier moyen de support d'un rouleau pour permettre l'application en continu sur le sol d'un troisième film disposé sur le premier film.

Selon un mode de réalisation préférentiel, les moyens d'épandage du substrat de culture principal comprennent un tambour entraîné de façon synchronisée avec le premier rouleau porteur d'entraînement, placé parallèlement aux rouleaux porteurs sous la trémie d'alimentation et muni de cornières pour appliquer, en coopération avec une plaque inférieure de position réglable par rapport à la trémie d'alimentation un débit prédéterminé de substrat de culture principal en fonction de la vitesse d'avancement définie par les rouleaux porteurs dans un plateau d'épandage incliné situé sous le tambour et muni d'un mouvement de va et vient.

Des moyens d'épandage comprennent en outre une raclette souple portant sur les cornières du tambour à la partie supérieure de celui-ci pour assurer à la fois l'étanchéité de la trémie, le nettoyage des cornières et l'élimination des effets de voûte dans la trémie.

Selon une autre caractéristique d'un mode particulier de réalisation, le dispositif de semis comprend un réservoir et un dispositif d'application de graines de semence ou de boutures et un dispositif d'alimentation en substrat de culture additionnel semi-liquide comprenant une pompe péristaltique associée à la vitesse d'avancement des premier et second rouleaux porteurs d'entraînement pour appliquer une quantité régulée de substrat additionnel semi-liquide à une boîte de détente placée à l'arrière du second rouleau plombeur et comportant un orifice de sortie coopérant avec une lame souple.

De préférence, le second rouleau plombeur et une partie au moins du dispositif de semis sont montés sur un cadre articulé permettant un contact sélectif du second rouleau plombeur avec le sol.

A titre d'exemple, le dispositif de scellage comprend un réservoir de colle, une pompe et des tubes pour appliquer des cordons de colle sur l'un au moins des films déposés en continu sur le sol, et de petit rouleaux plombeurs latéraux additionnels pour appliquer les films les uns sur les autres au niveau des cordons de colle.

Afin d'assurer une mécanisation complète du processus de culture hors sol à grande échelle, l'installation peut en outre comprendre un dispositif à résistance chauffante pour découper transversalement les films déposés en fin de parcours de la machine.

Avantageusement, le premier rouleau porteur d'entraînement qui forme une empreinte dans le sol est un peu plus large que le second qui assure un tassement du substrat de culture principal avant la fermeture du manchon emprisonnant ce substrat.

Selon un mode de réalisation particulièrement intéressant, qui permet de mettre en oeuvre une machine mobile spécialisée d'épandage de petite taille, l'installation comprend une remorque entraînée simultanément avec ladite machine mobile pour contenir un compartiment principal de stockage du substrat de culture principal, un réservoir principal de stockage du substrat de culture additionnel à l'état semi-liquide, un réservoir d'engrais et des moyens d'alimentation sélective de la trémie de ladite machine mobile en substrat de culture principal commandés en fonction d'un dispositif de détection du remplissage de la trémie d'alimentation.

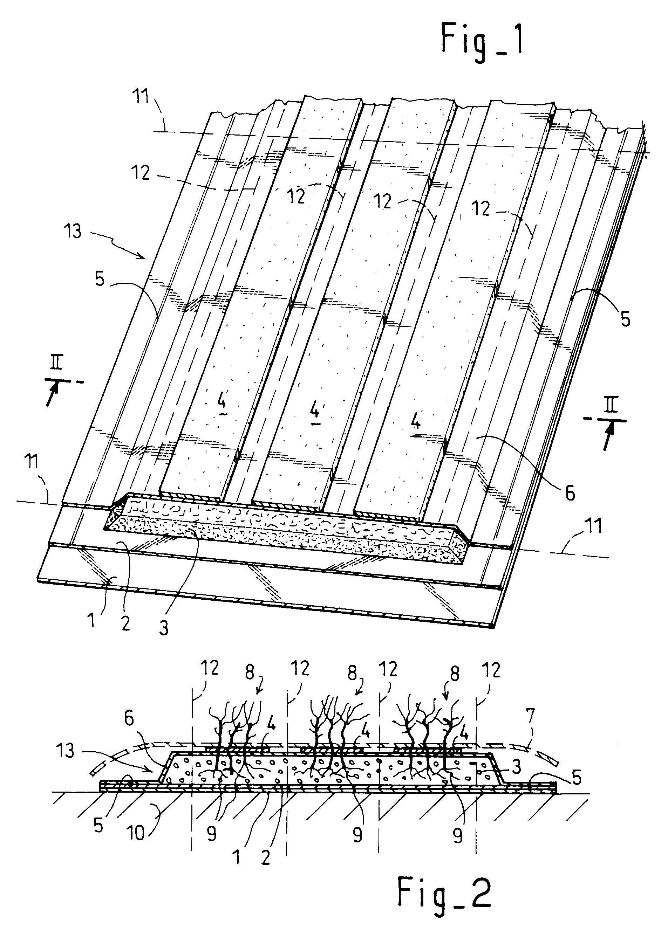

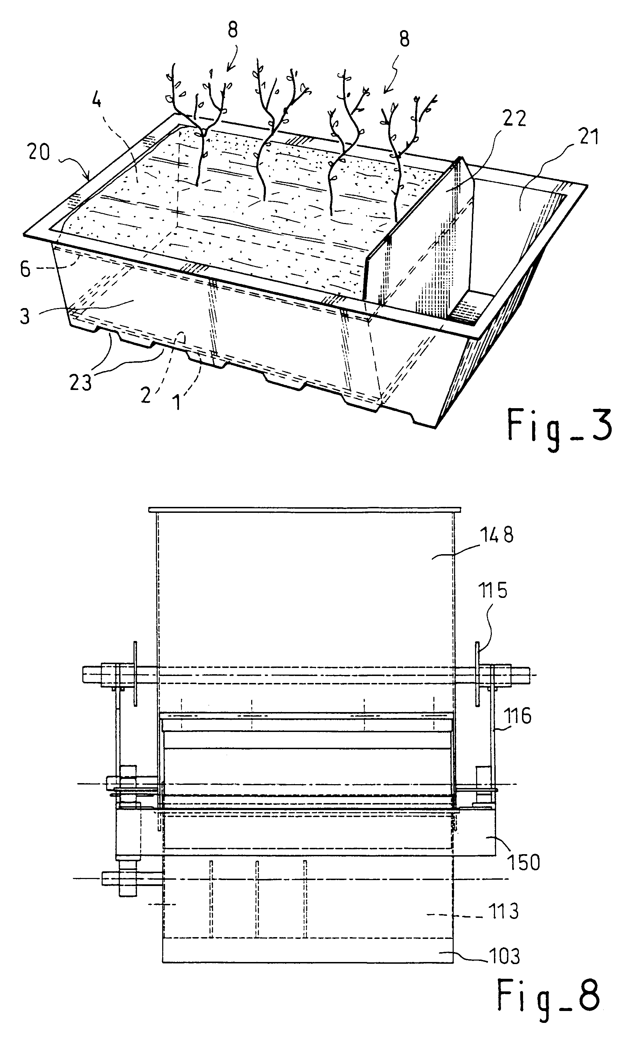

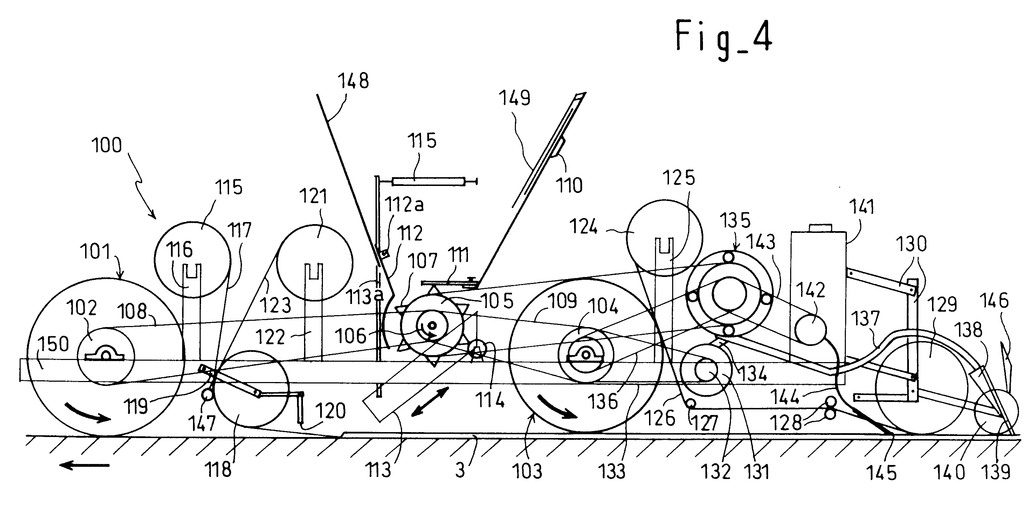

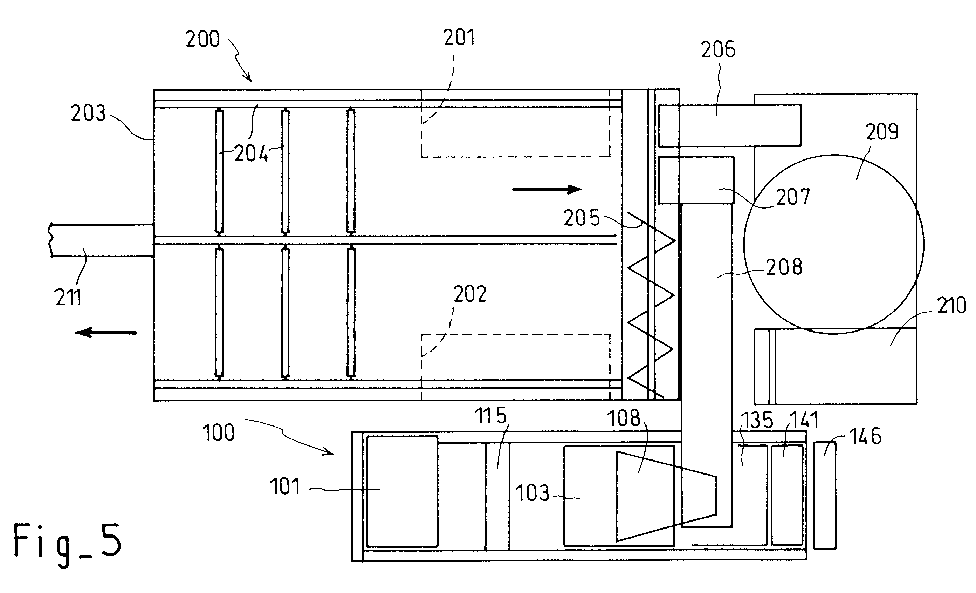

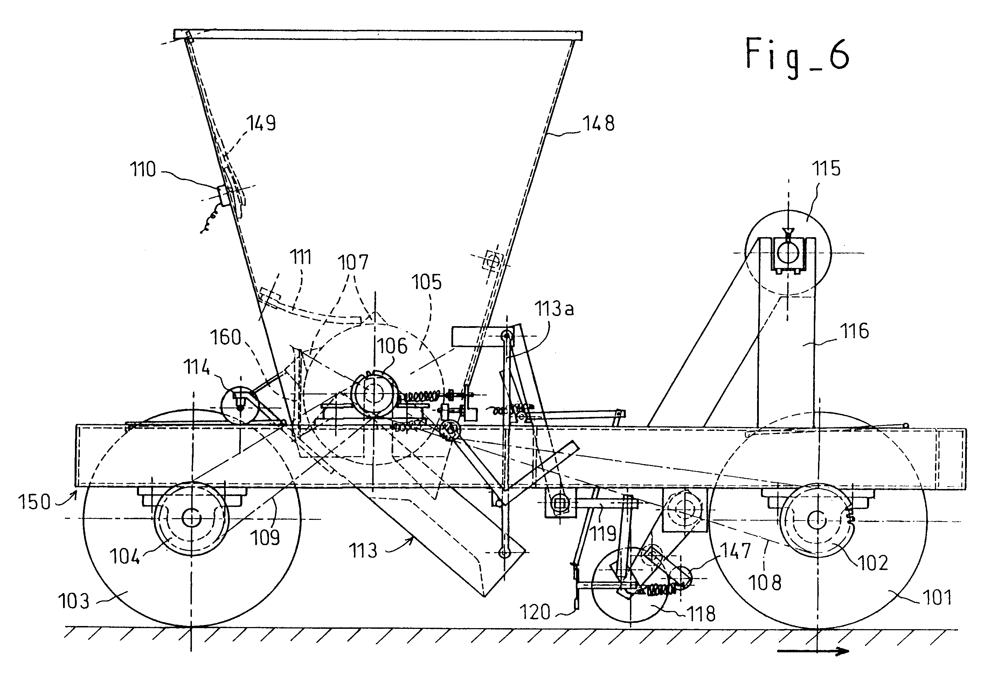

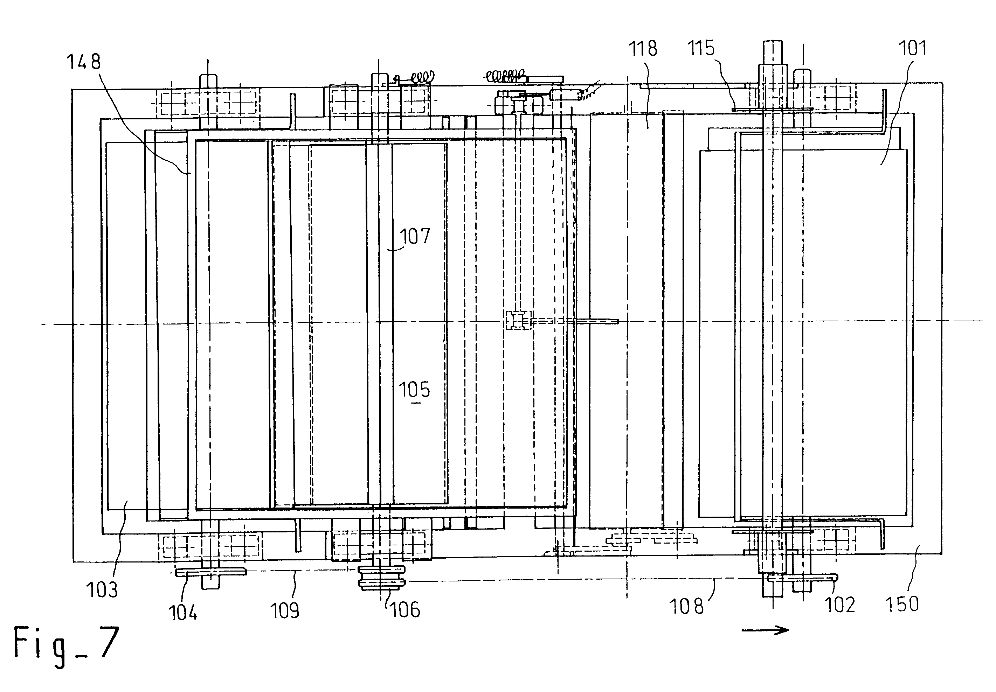

D'autres caractéristiques et avantages de l'invention ressortiront de la description suivante de modes particuliers de réalisation, donnés à titre d'exemples non limitatifs, en référence aux dessins annexés, sur lesquels :
. la figure 1 est une vue schématique en perspective avec arrachement montrant un exemple de manchon formé en continu pour la culture hors sol de plantes conformément à l'invention,
. la figure 2 est une vue en coupe selon le plan II-II de la figure 1,
. la figure 3 est une vue schématique en perspective d'un exemple de produit conditionné en barquette obtenu à partir d'un procédé de culture hors sol selon l'invention,
. la figure 4 représente le schéma fonctionnel de principe, en élévation, d'un exemple de machine mobile d'épandage permettant la mise en oeuvre mécanisée du procédé de culture hors sol selon l'invention,
. la figure 5 est une vue schématique de principe, de dessus, montrant l'association d'une machine mobile d'épandage telle que celle de la figure 4, avec une remorque de stockage adaptée, et
. les figures 6, 7 et 8 sont des vues respectivement en élévation, de dessus et de l'arrière d'un exemple particulier de machine mobile d'épandage munie de ses organes principaux et fonctionnant essentiellement selon le principe du schéma fonctionnel de la figure 4.

Le procédé de culture de plantes hors sol à grande échelle selon l'invention sera d'abord explicité en référence aux figures 1 et 2, selon un mode de réalisation qui met en oeuvre trois films de matière souple et deux types de substrat de culture différents.

Ce procédé est particulièrement adapté à la culture de plantes semées ou bouturées qui ont un système radiculaire faiblement ramifié, telles que des plantes aromatiques (par ex. persil, cerfeuil, ciboulette) ou de plantes qui doivent être espacées et prélevées pour être conditionnées et commercialisées jeunes, telles que des fleurs (oeillets, pensées, rodes d'inde par exemple).

Le procédé selon l'invention permet en effet de réaliser de façon mécanisée la mise en place en plein champ de moyens de culture hors sol de telles plantes, qui permettent la constitution d'un tapis suffisamment résistant pour pouvoir être ensuite récolté mécaniquement, divisé en petites unités et conditionné pour être commercialisé avec le substrat de culture initial afin de garantir une poursuite de la croissance des plantes après leur conditionnement.

Le procédé selon l'invention permet par ailleurs d'assurer grâce à deux types de substrat, une grandeadaptabilité aux conditions de germination des différentes plantes, ce qui garantit un fort taux de réussite dans les semis.

Le procédé de culture hors sol tel qu'illustré sur les figures 1 et 2 consiste à mettre en place en continu sur un sol dont la qualité importe peu, mais qui doit cependant être à peu près nivelé et exempt de grosses pierres, un premier film de matière plastique 1 étanche aux racines, mais de préférence perméable à l'eau. Un tel film 1 en matière plastique peut être un film muni de microperforations et est avantageusement opaque.

Il est ensuite déposé un film supplémentaire 2 réalisé en une matière non tissée à mailles fines, tel que par exemple un film de type PP 17 g/m ² commercialisé sous la marque déposée "Covertan-Pro" de la société allemande COROVIN GmbH, qui est constitué de filaments continus de polypropylène stabilisés aux ultra-violets assemblés parthermosoudage. De tels films sont habituellement utilisés comme simple bâches à plat ou couverture assurant une protection des plantations contre des risques climatiques et réalisent un effet de serre pour assurer un semi-forçage des plantes et améliorer la précocité des récoltes. Une telle bâche en non tissé posée de façon lâche sur les cultures laisse passer l'air, l'eau et la lumière en quantité suffisante pour la croissance des plantes, mais n'est pas traditionnellement ni recouverte de substrat, ni traversée par les plantes.

Le film supplémentaire 2 en non tissé qui est mis en place, conformément à l'invention, immédiatement au-desus du premier film plastique 1 et peut être déposé en même temps que ce dernier, est destiné à être traversé par les racines des plantes pour constituer un renfort inférieur du tissu naturel formé par ces racines, tout en emprisonnant un substrat de culture principal 3 constitué de particules calibrées, qui est déposé en continu sur le film non tissé 2 au fur et à mesure de la mise en place de celui-ci.

Le substrat de culture principal 3 peut être constitué de matières diverses comportant une proportion plus ou moins importante de matières nutritives, mais doit être composé de particules calibrées de manière à permettre un épandage régulier en formant un tapis d'épaisseur à peu près constante. La grosseur des particules moyennes est fonction de l'épaisseur du tapis de substrat, les particules pouvant être d'autant plus grosses que l'épaisseur du tapis est plus importante. Des particules passant dans un tamis de maille 10 mm conviennent généralement bien. Il convient toutefois de s'assurer que les particules du substrat restent suffisamment grosses pour ne pas constituer de la poussière qui colmaterait les ouvertures du film non tissé 2 ou plus généralement rendraient moins efficace l'épandage mécanisé du substrat et n'assureraient pas une conservation suffisamment longue du substrat.

A titre d'exemples, le substrat principal peut être constitué de l'une ou de plusieurs des matières suivantes mélangées : écorces broyées, par exemple écorces de résineux, tourbe, vermiculite, sciure de bois, terreau, laine de roche Toutefois, tous les produits ayant les caractéristiques physiques et chimiques correctes pour assurer une bonne rétention d'eau et de l'air peuvent convenir.

L'épaisseur moyenne de la couche du substrat principal 3 peut être comprise entre environ 15mm et 50mm.

Immédiatement après épandage de la couche du substrat principal 3, et après tassement de celle-ci par un rouleau, un deuxième film 6 en non tissé, qui peut être tout à fait identique au premier film 2 non tissé à mailles fines est déposé en continu sur la couche de substrat principal 3. Les divers films 1, 2 et 6 présentent une largeur plus importante que la couche de substrat principal 3, afin de permettre d'effectuer, également en continu, immédiatement après la pose du film supérieur 6, le scellage, par exemple par collage, d'au moins le film supérieur 6, et du film non tissé inférieur 2 ou du film plastique de base 1, selon deux cordons 5 situés au voisinage des bords longitudinaux des films 1, 2, 6, de manière à constituer un manchon continu 13 enserrant le substrat principal 3 et formé sur place au fur et à mesure de l'épandage du substrat 3. En ce sens, ce procédé se distingue radicalement des procédés de culture hors sol en sacs préfabriqués, qui ne se prêtent pas à une exploitation mécanisée à grande échelle.

Un substrat de culture additionnel 4 sous la forme d'une boue semi-liquide est épandu sur le manchon 13. Cet épandage peut également s'effectuer au cours de l'opération même de fabrication du manchon 13 au fur et à mesure de la formation de celui-ci à l'aide de la même machine dont tous les mouvements sont synchronisés avec la vitesse de déplacement de la machine.

Le substrat additionnel 4 semi-liquide peut être épandu de manière à former une couche présentant une épaisseur comprise entre environ 2 et 5 millimètres. Le substrat additionnel peut être constitué à partir de tourbe à motte ou plus particulièrement d'un mélange de tourbe noire et de tourbe blonde. Le substrat additionnel est destiné à favoriser la germination des graines et peut donc être adapté à chaque plante tandis que le substrat principal 3 peut être commun à diverses cultures. Le substrat additionnel est également utile dans le cas de boutures pour favoriser la reprise de celles-ci.

On notera que les graines de semence ne sont pas prémélangées au substrat principal 3, mais sont au contraire déposées sur le manchon 13 après formation de celui-ci.

Selon les types de plantes, notamment les caractéristiques de germination et la taille des graines, ou le type de boutures lesgraines ou les boutures peuvent être déposées sur le film supérieur en non tissé 6, puis recouvertes du substrat additionnel 4 ou au contraire être déposées sur le substrat additionnel 4 après épandage celui-ci ou encore être prémélangées au substrat additionnel 4. Dans tous les cas, les graines ou les boutures ne sont pas prémélangées au substrat principal 3, ce qui permet entre autres de changer rapidement de type de plante, de n'effectuer que des interventions limitées sur la machine d'épandage lors d'un changement de variété de graines et de ne pas gaspiller de semence.

Comme dans le cas de cultures traditionnelles, un film non tissé 7 peut en outre recouvrir de façon classique sous forme de bâche un ou plusieurs manchons 13 de culture hors sol en vue d'assurer un semi-forçage de la croissance et une protection contre des intempéries ou des déprédations dues à des animaux. Une telle bâche 7 est retirée en cours de culture.

De même, le substrat additionnel 4 placé sur le manchon 13 peut être le cas échéant éliminé en cours de culture ou à la récolte dans la mesure où il ne joue plus de rôle particulier. On dispose alors de plantes 8 dont les racines 9 plongent dans le substrat principal 3 en étant insérées dans les films non tissés inférieur 2 et supérieur 6. Le manchon 13 constitue avec les films inférieur 2 et supérieur 6 et les racines 9 un tissu suffisamment solide pour être manutentionné, même avec des plantes cultivées séparément les unes des autres. Par ailleurs le substrat principal 3 reste emprisonné dans le manchon 13, ce qui améliore la propreté de la présentation.

La culture hors sol de plantes 8 dans les manchons 13, une fois ceux-ci installés, peut s'effectuer comme pour des cultures en plein champ, avec les arrosages et apports nécessaires de solutions nutritives complémentaires.

Après la croissance des plantes 8, il est possible de réaliser un ramassage mécanisé ou manuel très rapide, même pour des plantes jeunes, grâce à la qualité du tapis formé par le manchon 13.

Les manchons 13 peuvent être ramassés en plaques ou en rouleau, puis sont ensuite découpés en petites unités et conditionnés dans des pots, barquettes ou cagettes pour être commercialisés, chaque unité comprenant des plantes 8 et un tapis constitué du substrat principal 3 emprisonné entre les films en non tissé 2 et 6. Le film 1 en matière plastique microperforé peut être laissé sur place lors de la récolte, pour être éventuellement réutilisé, ou peut également être ramassé avec le reste du manchon 13.

Avantageusement, comme cela est représenté sur les figures 1 et 2, on peut former simultanément sur le même manchon 13 plusieurs bandes parallèles de la couche de substrat supplémentaire 4, écartées les unes des autres, pour la culture en ligne de plusieurs séries de plantes, identiques ou différentes, sur le même manchon 13.

A titre d'exemple une couche de substrat de culture additionnel peut présenter une largeur comprise entre environ 6 et 10 cm tandis qu'un manchon 13 comprenant le substrat de culture principal 3 peut présenter une largeur comprise entre environ 0,50 m et 1,00 m, par exemple de l'ordre de 0,60 à 0,70m.

La densité des plantes par unité de surface est naturellement fonction des types et variétés. A titre d'exemple, le procédé peut être utilisé pour la culture de 8 à 15 pieds de persil par surface unitaire de 20 x 25cm.

Divers engrais, fumures, engrais retards et apporta nutritifs peuvent naturellement être mélangés au substrat principal 3 avant l'épandage de celui-ci, selon les besoins des plantes. De même, les opérations d'arrosage et apports ultérieurs de solutions nutritives peuvent se faire selon les règles de culture hors col.

Sur la figure 1, on a indiqué par des traits discontinus les lignes transversales 11 qui symbolisent des découpes effectuées lors de la récolte pour définir des plaques unitaires, par exemple d'une longueur de l'ordre de 1,50m, faciles à manipuler et pouvant être empilées les unes sur les autres.

Les lignes longitudinales discontinues 12 des figures 1 et 2 symbolisent des découpes qui peuvent être effectuées en atelier lors du conditionnement des produits précultivés à commercialiser. Les bandes de plantes comprises entre deux lignes longitudinales 12 peuvent être naturellement elles-mêmes divisées pour s'adapter au format de récipients prévus pour conditionner les plantes.

La figure 3 montre un exemple de plantes 8 produites conformément au procédé selon l'invention et conditionnées dans un petit bac 20 pour être commercialisées.

Le bac 20 peut comprendre un compartiment principal recevant un bloc de plantes en tapis obtenu à partir d'un tronçon de manchon de production 13, et un compartiment additionnel 21 séparé du compartiment principal par une cloison 22, par exemple pour constituer une réserve d'eau. Le fond du bec 20 peut être muni de nervures 23.

Sur la figure 3 on a représenté un bloc avec une couche 4 de substrat additionnel, ainsi qu'un film inférieur 1 en matière plastique. Toutefois, la couche 4 peut facilement être supprimée après la croissance des plantes de façon à former un bloc dont la face supérieure est simplement délimitée par un film supérieur 6 en non tissé. De même, le substrat principal 3 du bloc peut simplement être retenu à sa partie inférieure par le film 2 en non tissé dans lequel sont engagées les racines 9 des plantes 8, de sorte que le film de base 1 peut ne pas être présent dans le produit final.

Le procédé selon l'invention peut présenter diverses variantes de réalisation.

Ainsi, selon une application particulière, par exemple à la culture de tomates, le manchon 13 peut ne comprendre qu'un film en matière plastique 1 inférieur, et un film supérieur 6 également en matière plastique ou en non tissé, qui sont collés par leurs bords longitudinaux en insérant la couche de substrat principal 3 selon un processus continu de formation in situ semblable à celui déjà décrit. Dans ce cas, le film 2 en non tissé n'est pas présent, et le film supérieur 6 peut être fendu ou perforé localement avant épandage du substrat additionnel 4 et des graines ou boutures. Comme dans le cas du procédé précédemment décrit, les films 1 et 6 formant le manchon présentent une largeur un peu plus importante que la couche du substrat principal 3.

A titre d'option, après dépôt, sur le manchon 13, d'un semis constitué de graines de semences ou de boutures et d'un substrat de culture supplémentaire 4 fortement humidifié constituant une boue semi-liquide, il est encore possible de recouvrir la couche 4 à l'aide d'une autre couche de substrat non boueux constitué par exemple d'écorces broyées calibrées mélangées à des produits fertilisants. Ceci peut permettre d'accroître la régularité de la germination avec certaines variétés de fleurs notamment.

On décrira maintenant en référence à la figure 4 une machine mobile d'épandage 100 adaptée à la mise en oeuvre du procédé selon l'invention et assurant la formation mécanisée d'un manchon 13 de culture hors sol en plein champ.

La machine d'épandage 100 selon l'invention comprend essentiellement un châssis principal 150 reposant sur deux rouleaux porteurs avant 101 et arrière 103 qui présentent des diamètres identiques.

Le premier rouleau porteur 101 assure un tassement du terrain avant la formation d'un manchon de culture 13 et présente avantageusement une largeur un peu plus grande que celle du deuxième rouleau porteur 103.

Le second rouleau porteur 103 assure un tassement de la couche de substrat de culture principal 3 déposé sur le sol par la machine après mise en place des films inférieurs 117 et 120.

La machine d'épandage 100 peut être auto-tractée ou entraînée par un engin séparé. Dans tous les cas les mouvements de rotation conférés aux rouleaux porteurs 101 et 103 servent à dériver les mouvements d'actionnement des différents autres organes de la machine 100 de façon synchronisée avec la vitesse d'avance de la machine, ce qui contribue à assurer une régularité dans la formation d'un manchon' de culture 13.

Un support 116 d'un rouleau 115 de film 117 en matière plastique constituant le film de base 1 des figures 1 et 2, est disposé au voisinage du rouleau porteur avant 101.

Un moyen 122 de support d'un rouleau 121 de film 123 en non tissé, correspondant au film 2 des figures 1 et 2 est également placé au voisinage du support 116 de rouleau 115.

Un troisième moyen 125 de support d'un rouleau 124 de film 126 correspondant au film 6 des figures 1 et 2 est par ailleurs placé au voisinage du rouleau porteur arrière 103.

Un rouleau plombeur 118 disposé immédiatement derrière le rouleau 101 est monté sur un bras articulé 119 de manière à pouvoir être mis sélectivement en contact avec le sol au début de chaque parcours de formation d'un manchon 13 pour appliquer simultanément sur le terrain les films 117 et 123 issus des rouleaux 115, 121 et superposés. Un galet 147 peut en outre assurer la tension des films 117 et/ou 123 et leur application sur le rouleau 118 lorsque celui-ci est relevé.

Une résistance chauffante 120 est avantageusement disposée derrière le rouleau plombeur 118 pour assurer la découpe transversale du film 117 en matière plastique ainsi que du film 123 en fin de parcours.

Un second rouleau plombeur 129 monté sur un parallélogramme articulé 130 est disposé à l'arrière du rouleau porteur arrière 103 et peut être mis sélectivement en contact avec le sol au début de chaque parcours pour appliquer sur le sol la film supérieur 126 issu du rouleau 124 et guidé et tendu par de petits rouleaux intermédiaires 127,128.

Le dispositif principal d'épandage, disposé entre les rouleaux avant et arrière 101, 103, pour former une couche régulière de substrat principal 3 comprend essentiellement une trémie d'alimentation 148 située au-dessus d'un tambour 105 parallèle aux rouleaux 101,103 et muni de cornières 107 d'entraînement du substrat 3. Le tambour 105 surmonte lui-même un plateau d'épandage incliné 113 animé d'un mouvement de va et vient par le tambour d'épandage 105 par l'intermédiaire d'une petite roue 114 portant sur le châssis 150.

Le mouvement alternatif de va et vient du plateau d'épandage 113 est destiné à faciliter la formation d'une couche de substrat 3 d'épaisseur réduite et constante.

Le tambour 105 assure lui-même avec les cornières 107 et en coopération avec une plaque 112 prolongeant la trémie 148, le débit régulier du substrat 3 en rapport avec la vitesse d'avancement de la machine. Des pignons 102, 104,106 solidaires respectivement des rouleaux 101,103 et du tambour 105 et des chaînes 108, 109 en prise avec ces pignons garantissent le synchronisme de la rotation des rouleaux 101, 103 et du tambour 105.

La position de la plaque 112 articulée sur la trémie autour d'un axe 112a, est ajustable pour permettre un réglage du débit du substrat.

La position du plateau incliné d'épandage 113 relié à la trémie 148 par une tige 113a coopérant avec un ressort de rappel 115 est également ajustable par ladite tige 113a. Le système à plateau animé d'un mouvement de va et vient est bien adapté à la réalisation d'un tapis régulier pour un épandage à faible vitesse.

Une lame flexible, par exemple en caoutchouc, assure l'étanchéité à la base de la trémie 148 pour ne laisser que le passage autorisé entre le tambour 105 et la plaque 112 pour le substrat 3. La lame 111 permet en outre de nettoyer en permanence les cornières 105 du tambour 105 et, par ses vibrations, d'éviter la formation de voûtes à l'intérieur de la trémie 148.

Un contacteur 110 placé dans la partie supérieure de la trémie 148 et coopérant avec une plaque 149 permet de détecter la baisse du niveau de produit dans la trémie 148 et l'alimentation de celle-ci à partir d'une réserve principale annexe telle que celle qui est prévue dans les cas de la configuration de la figure 5.

Après dépose des films 117 et 123 sur le sol, et de préférence après la formation d'une couche de substrat principal 3 et le tassement de cette couche de substrat principal 3 par le rouleau arrière 103, et avant dépose du film supérieur 126, la machine 100 assure le scellage en continu des bords longitudinaux des films 117, 123 et 126 formant le manchon de culture 13.

Pour cela, un dispositif d'application de colla 145 est disposé de part et d'autre de la machine 100 pour déposer un cordon de colla sur le film en non tissé 123 au voisinage de chacun de ses bords longitudinaux, de part et d'autre de la couche de substrat 3. La colla est appliquée aux dispositifs 145 par des tubes d'écoulement 144 à partir d'un réservoir 141 monté sur la machine, en étant aspirée par une pompe 142, entraînée par une chaîne ou courroie 143 en synchronisme avec le mouvement d'avance de la machine.

De petites roues plombeuses 140 disposées de part et d'autre de la machine assurent la mise en contact des films 126, 123, 117 avec les cordons de colla.

Le substrat additionnel 4 à l'état semi-liquide destiné à être épandu en couche mince sur le manchon 13 après dépose du film supérieur 126 et placage par le rouleau plombeur 129 peut être contenu dans un réservoir 131 monté sur la machine 100 qui est de préférence alimenté à partir d'un réservoir 209 placé sur une remorqua séparée (figure 5).

Le substrat additionnel 4 maintenu à l'état de boue dans le réservoir 209 alimente le réservoir cylindrique 131 contenant un agitateur à palattes pour éviter au substrat de culture de sa déposer, puis alimente une pompe 135, par exemple de type péristaltique placée sur le réservoir 131.

L'agitateur à palattes et la pompe 135 fonctionnent en synchronisme avec la vitesse d'avance de la machine 200, grâce à des chaînes de transmissions 132, 133, 136 assurant une liaison avec la rouleau 103.

Le débit du substrat additionnel 4 de germination est ainsi régulé par la pompe 135 en fonction de l'avance de la machine pour garantir un épandage régulier.

Des tuyaux 137 assurent l'alimentation en substrat additionnel 4 de la pompe 135 à des boîtes métalliques de détente 138 associée à des lames souples 139 assurant la régularité de l'écoulement.

Des semoirs 146 sont disposés au voisinages des boîtes de détente 138. Ces semoirs permettent selon les cas de déposer les graines ou le cas échéant les boutures avant ou après épandage du substrat de germination 4 ou de mélanger ces graines ou boutures à ce substrat additionnel 4 avant son épandage.

Un compartiment supplémentaire contenant une réserve d'un substrat non boueux constitué par exemple d'écorces broyées calibrées mélangées à des produits fertilisants peut être installé à l'arrière de la machine pour permettre, lorsque cela est nécessaire, l'épandage d'une couche supplémentaire de substrat non boueux par dessus la couche 4 de substrat de culture fortement humidifié dans laquelle les graines de semence ont été déposées.

L'ensemble de semis comprenant les bottes de détente 139 et les semoirs 146, ainsi que les dispositifs 145, 140 de scellage des films peuvent être relevés avec le rouleau plombeur arrière 129 lorsque la machine arrive en fin de parcours.

La figure 5 montre un mode réalisation avantageux dans lequel la machine d'épandage 100 est de petite taille et se trouve associée à une remorque 200 pouvant être automotrice ou tractée par le timon 211. La remorque 200 équipée de roues larges 201, 202 comprend essentiellement un caisson 203 pour contenir une réserve de substrat principal 3. Un tapis constitué de chaînes et de barrettes 204 permet l'entraînement du substrat vers une vis entraîneuse 205 amenant le substrat dans une goulotte débouchant au-dessus de la trémie 148 de la machine 100, lorsque celle-ci doit être alimentée. Un réservoir d'engrais 206 ainsi qu'un réservoir supplémentaire 207, pouvant servir de semoir de graines ou boutures pour d'autres applications, telles que la formation de tapis de gazon, permettent d'ajouter au substrat 3 contenu dans le caisson 203, au niveau de la vis d'alimentation 205, des additifs utiles tels que des engrais retards par exemple.

Un poste de commande 210 peut être installé à l'arrière de la remorque 200 à côté d'un réservoir principal 209 de substrat additionnel.

Sur la figure 5, seuls certains éléments de la machine d'épandage 100 on été représentés symboliquement, mais cette machine 100 peut être conforme à la description faite précédemment en référence à la figure 4.

Les figures 6 à 8 représentent un exemple particulier de réalisation mécanique d'une structure de base pour la machine d'épandage 100. Sur les figures 6 à 8, certains éléments ont été omis tels que les rouleaux de film non tissé 121, 124, les dispositifs 140 à 145 de scellage des films 123, 126, les dispositifs 131 à 139 d'application de substrat additionnel 4, les semoirs 146 et le second rouleau plombeur 129.

Les figures 6 à 8 montrent de façon plus détaillée essentiellement la partie centrale d'épandage du substrat principal 3. La figure 6 permet notamment de voir en pointillés une plaque verticale 160 solidaire de la roue 114 et du plateau d'épandage 113, sur laquelle viennent porter les cornières 107 lors de leur retour vers la lame semi-flexible 111, pour conférer au plateu d'épandage 113 son mouvement dde va-et-vient dans le sens longitudinal.

## Revendications

1. Procédé de production industrielle de plantes en culture hors sol, caractérisé en ce qu'il comprend les étapes suivantes :
1°) former en continu sur le sol un manchon (13) renfermant un substrat de culture (3) composé de particules calibrées en déposant en continu sur le sol successivement au moins un premier film (1) en matière plastique étanche aux racines, une couche dudit substrat de culture (3) d'épaisseur prédéterminée et de largeur inférieure à celle du premier film (1), et au moins un deuxième film (6) de largeur supérieure à celle de la couche de substrat de culture (3), et en assurant en continu au fur et à mesure de la formation du manchon (13), la solidarisation, par collage ou soudage, des bords longitudinaux des premier et deuxième films (1,6),
2°) déposer sur le manchon (13) un semis constitué de graines de semence ou de boutures et d'un substrat de culture supplémentaire (4) fortement humidifié constituant une boue semi-liquide,
3°) laisser croître les plantes (8) avec arrosage et apport éventuel de solutions nutritives,
4°) ramasser en plaques ou en rouleau le manchon de culture après croissance des plantes (8), et
5°) découper et conditionner des tronçons de manchon de culture contenant des plantes (8).

2. Procédé selon la revendication 1, caractérisé en ce que lors de la formation du manchon (13) on dépose sur le premier film (1) en matière plastique étanche aux racines, avant le dépôt d'une couche de substrat de culture (3), un troisième film (2) en non tissé à mailles fines perméable aux racines de largeur supérieure à celle de la couche de substrat de culture (3), et on assure en continu au fur et à mesure de la formation du manchon (13), la solidarisation par collage ou soudage des bords longitudinaux des deuxième et troisième films (6,2).

3. Procédé selon la revendication 1 ou la revendication 2, caractérisé en ce que le deuxième film (6) est en non tissé à mailles fines perméable aux racines.

4. Procédé selon l'une quelconque des revendications 1 à 3, caractérisé en ce que l'on dépose en continu le substrat de culture supplémentaire (4) fortement humidifié.

5. Procédé selon l'une quelconque des revendication 1 à 4, caractérisé en ce que les graines de semence ou de boutures sont prémélangées au substrat de culture supplémentaire (4) avant épandage.

6. Procédé selon l'une quelconque des revendication 1 à 4, caractérisé en ce que les graines de semence ou de boutures sont déposées sur le manchon (13) de façon séparée du substrat de culture supplémentaire (4) avant ou après épandage de ce dernier.

7. Procédé selon l'une quelconque des revendications 1 à 6, caractérisé en ce que le premier film (1) est un film en matière plastique perméable à l'eau tel qu'un film microperforé.

8. Procédé selon la revendication 1, caractérisé en ce que le film (6) est un film en matière plastique dans lequel sont formés des orifices ou des fentes avant le dépôt du semis.

9. Procédé selon l'une quelconque des revendication 1 à 8, caractérisé en ce le substrat de culture (3) est constitué de particules calibrées d'au moins l'une des matières suivantes : écorces broyées, tourbe, vermiculite, sciure de bois, terreau, laine de roche.

10. Procédé selon l'une quelconque des revendications 1 à 9, caractérisé en ce que le substrat de culture supplémentaire (4) est constitué d'une tourbe à motte finement broyée et humidifiée avant l'épandage.

11. Procédé selon l'une quelconque des revendications 1 à 10, caractérisé en ce que la couche de substrat de culture (3) présente une épaisseur moyenne comprise entre envuon 15mm et 50mm.

12. Procédé selon l'une quelconque des revendications 1 à 11, caractérisé en ce que la couche de substrat de culture supplémentaire (4) épandue à l'état semi-liquide présente une épaisseur moyenne comprise entre environ 2mm et 5mm.

13. Procédé selon l'une quelconque des revendications 1 à 12, caractérisé en ce qu'il comprend la formation simultanée de plusieurs bandes parallèles de la couche de substrat de culture supplémentaire (4) écartées les unes des autres sur un manchon unique (13).

14. Procédé selon la revendication 13, caractérisé en ce que la largeur d'une couche de substrat de culture (3) est comprise entre environ 0,50m et 1,00m tandis que la largeur d'une couche de substrat de culture additionnel (4) est comprise entre environ 6cm et 10cm.

15. Procédé selon les revendications 2 et 3, caractérisé en ce que lors de l'étape de ramassage, le premier film en matière plastique (1) est laissé en place tandis que le manchon (13) constitué par les deuxième et troisième films (6,2) en non tissé enserrant la couche de substrat de culture (3) dans lequel ont pénétré les racines (9) des plantes (8) est ramassé en plaque ou rouleau.

16. Procédé selon l'une quelconque des revendications 1 à 15, caractérisé en ce qu'il est appliqué à la culture de plantes semées, ou bouturees notamment de fleurs et de plantes aromatiques telles que le persil, le cerfeuil et la ciboulette.

17. Procédé selon l'une quelconque des revendication 1 à 16 , caractérisé en ce que les plantes semées ou bouturées dont les racines sont enchevêtrées dans une couche de substrat de culture principal (3) composé de particules calibrées enserrées entre des films inférieur (2) et supérieur (6) en non tissé à mailles fines sont conditionnées dans une barquette.

18. Installation pour la mise en oeuvre du procédé selon l'une quelconque des revendications 1 à 16, caractérisée en ce qu'elle comprend une machine mobile (100) comprenant un châssis monté sur des premier et deuxième rouleaux d'entraînement (101,103) parallèles qui portent sur le sol et présentent le même diamètre, un premier moyen (116) de support d'un rouleau (115) d'un premier film (117), placé au voisinage du premier rouleau porteur d'entraînement (101), un second moyen (125) de support d'un rouleau (124) d'un deuxième film (126), placé au voisinage du second rouleau porteur d'entraînement (103), une trémied'alimentation (148) disposée entre les premier et second rouleaux porteurs d'entraînement (101,103) pour l'alimentation en substrat de culture principal (3), des moyens (105,111,112,113,114) synchronisés avec l'avancement des premier et second rouleaux porteurs d'entraînement (101,103) pour épandre de façon régulée le substrat de culture principal (3) contenu dans la trémie d'alimentation (148), des premier et deuxième rouleaux plombeurs (118,129) pouvant être mis en contact avec le sol respectivement derrière les premier et deuxième rouleaux porteurs d'entraînement (101,103), pour appliquer sur le sol lesdits premier et deuxième films (117,126), un dispositif de scellage (141,142,144,145) disposé au voisinage du deuxième rouleau plombeur (129) pour solidariser les bords longitudinaux des premier et deuxième films (117,126) appliqués sur le sol, et un dispositif de semis (135,137,138,146) disposé au voisinage du deuxième rouleau plombeur (129) pour déposer sur le sol à l'arrière de celui-ci à la fois des graines de semence ou des boutures et un substrat de culture additionnel (4) semi-liquide.

19. Installation selon la revendication 18, caractérisée en ce qu'elle comprend en outre un troisième moyen (122) de support d'un rouleau (121) d'un troisième film (123), placé au voisinage dudit premier moyen (116) de support d'un rouleau (115) pour permettre l'application en continu sur le sol d'un troisième film (123) disposé sur le premier film (117).

20. Installation selon la revendication 19, caractérisé en ce que le premier rouleau plombeur (118) est monté sur un bras articulé pour être mis sélectivement en contact avec le sol et est monté de façon à assurer l'application simultanée sur le sol des premier et troisième films (117,123).

21. Installation selon l'une quelconque des revendications 18 à 20, caractérisé en ce que les moyens (105,111 à 114) d'épandage du substrat de culture principal (3) comprennent un tambour (105) entraîné de façon synchronisée avec le premier rouleau porteur d'entraînement (101), placé parallèlement aux rouleaux porteurs (101,103) sous la trémie d'alimentation (148) et muni de cornières (107) pour appliquer, en coopération avec une plaque inférieure (112) de position réglable par rapport à la trémie d'alimentation (148) un débit prédéterminé de substrat de culture principal (3) en fonction de la vitesse d'avancement définie par les rouleaux porteurs (101,103) dans un plateau d'épandage incliné (113) situé sous le tambour (105) et muni d'un mouvement de va et vient.

22. Installation selon la revendication 21, caractérisée en ce que les moyens (105,111 à 114) d'épandage comprennent en outre une raclette souple (111) portant sur les cornières du tambour (10) à la partie supérieure de celui-ci pour assurer à la fois l'étanchéité de la trémie (148), le nettoyage des cornières (107) et l'élimination des effets de voûte dans la trémie (148).

23. Installation selon l'une quelconque des revendications 18 à 22, caractérisée en ce que le dispositif de semis (135,137,138,146) comprend un réservoir et un dispositif d'application de graines de semence ou de boutures (146) et un dispositif d'alimentation en substrat de culture additionnel (4) semi-liquide comprenant une pompe péristaltique (135) associée à la vitesse d'avancement des premier et second rouleaux porteurs d'entraînement (101,103) pour appliquer une quantité régulée de substrat additionnel semi-liquide à une boîte de détente (138) placée à l'arrière du second rouleau plombeur (129) et comportant un orifice de sortie coopérant avec une lame souple (139).

24. Installation selon l'une quelconque des revendications 18 à 23, caractérisée en ce que le second rouleau plombeur (129) et une partie au moins du dispositif de semis (138,139,146) sont montés sur un cadre articulé (130) permettant un contact sélectif du second rouleau plombeur (129) avec le sol.

25. Installation selon l'une quelconque des revendications 18 à 24, caractérisée en ce que le dispositif de scellage comprend un réservoir de colle (141), une pompe (142) et des tubes (145) pour appliquer des cordons de colle sur l'un au moins des films (117,123) déposés en continu sur le sol, et de petit rouleaux plombeurs latéraux additionnels (22) pour appliquer les films (117,123,126) les uns sur les autres au niveau des cordons de colle.

26. Installation selon l'une quelconque des revendications 18 à 25, caractérisée en ce qu'elle comprend en outre un dispositif à résistance chauffante (120) pour découper transversalement les films (117,123,126) déposés en fin de parcours de la machine (100).

27. Installation selon l'une quelconque des revendications 18 à 26,, caractérisée en ce que le premier rouleau porteur d'entraînement (101) est un peu plus large que le second rouleau porteur d'entraînement (103).

28. Installation selon l'une quelconque des revendications 18 à 27, caractérisée en ce qu'elle comprend une remorque (200) entraînée simultanément avec ladite machine mobile (100) pour contenir un compartiment principal de stockage du substrat de culture principal (3), un réservoir principal (209) de stockage du substrat de culture additionnel (4) à l'état semi-liquide, un réservoir d'engrais (206) et des moyens d'alimentation sélective de la trémie (148) de ladite machine mobile (100) en substrat de culture principal (3) commandés en fonction d'un dispositif (110,149) de détection du remplissage de la trémie d'alimentation (148).

## Claims

1. Process for the industrial production of plants in soil-free culture, characterized in that it comprises the following stages:
1) forming in a continuous manner on the soil a sleeve (13) enclosing a culture substratum (3) composed of graded particles by laying in a continuous manner on the soil in succession at least a first plastics film (1), sealing tight at the roots, a layer of said culture substratum (3) of predetermined thickness and of width smaller than that of the first film (1), and at least one second film (6) with a width greater than that of the layer of culture substratum (3), and ensuring in a continuous manner as the sleeve (13) is formed, fastness, by bonding or welding of the longitudinal edges of the first and second films (1, 6).
2) depositing on the sleeve (13) a seeding comprising seeds or cuttings and an additional culture substratum heavily moistened comprising a semi-liquid mud,
3) rearing the plants by watering and optionally with nutrient solutions,
4) gathering in sections or in rolls the cultivation sleeve after the plants have grown (8), and
5) cutting, handling and packing the sections of cultivation sleeve containing the plants (8).

2. Process according to claim 1, characterized in that while the sleeve (13) is being formed, before a culture substratum is deposited, a third film in nonwoven with fine meshing permeable at the roots whose width is greater than that of the culture substratum layer is deposited on the first plastics film which is sealing tight at the roots, and as the sleeve is formed the fastness is ensured in a continuous manner by sticking or welding the longitudinal edges of the second and third films.

3. Process according to claim 1 or claim 2, characterized in that the second film (6) is made of nonwoven with fine meshing and is permeable at the roots.

4. Process according to any one of claims 1 to 3, characterized in that the heavily moistened additional culture substratum is deposited in a continuous manner.

5. Process according to any one of claims 1 to 4, characterized in that the seed grains or cuttings are premixed with the additional culture substratum before spreading.

6. Process according to any one of claims 1 to 4, characterized in that the seed grains or cuttings are deposited on the sleeve so as to be separate from the additional culture substrate before or after the latter is spread.

7. Process according to any one of claims 1 to 6, characterized in that the first film (1) is a water-permeable plastics film such as a microperforated film.

8. Process according to claim 1, characterized in that the film (6) is a plastics film in which orifices or slots are formed before the seeding is deposited.

9. Process according to any one of claims 1 to 8, characterized in that the culture substratum comprises graded particles of at least one of the following substances: ground bark, peat, vermiculite, humus earth, rock wool.

10. Process according to any one of claims 1 to 9, characterized in that the additional culture substratum comprises a clod peat finely ground and moistened before spreading.

11. Process according to any one of claims 1 to 10, characterized in that the culture substratum layer (3) has an average thickness of approximately 15 mm to 50 mm.

12. Process according to any one of claims 1 to 11, characterized in that the additional substratum layer spread in the semi-liquid state has an average thickness of approximately 2 mm to 5 mm.

13. Process according to any one of claims 1 to 12, characterized in that it comprises the simultaneous formation of several parallel strips of the additional culture substratum layer which are set at a distance from one another on a single sleeve.

14. Process according to claim 13, characterized in that the width of one culture substratum layer is approximately 0.50 m to 1.00 m whereas the width of one additional culture substratum layer is approximately 6 cm to 10 cm.

15. Process according to claims 2 and 3, characterized in that during the picking stage, the first plastics film (1) is left in place while the sleeve comprising the second and third films in nonwoven enclosing the culture substratum layer in which the roots (9) of the plants (8) have penetrated is gathered up in sections or rolls.

16. Process according to any one of claims 1 to 15, characterized in that it is applied to the culture of seed plants, or cuttings notably flowers and aromatic plants such as parsley, chervil and chives.

17. Process according to any one of claims 1 to 16, characterized in that the seed plants or cuttings of which the roots are entangled in a main culture substratum layer (3) composed of calibrated particles enclosed between lower (2) and upper (6) films in non-woven material with fine meshes, are packed in a tray.

18. Installation for carrying out the process according to any one of claims 1 to 16, characterized in that it comprises a mobile machine (100) comprising a chassis mounted on first and second parallel transport rollers (101, 103) which beat on the soil and have the same diameter, a first means (116) for supporting a roll (115) of a first film (117), placed in the vicinity of the first transport bearing roller (101), a second means (125) for supporting a roll (124) of a second film (126), placed in the vicinity of the second transport bearing roller (103), a feed hopper (148), arranged between the first and second transport bearing rollers (101, 103) to supply main culture substratum (3), means (105, 111, 112, 113, 114) synchronized with the forward movement of the first and second transport bearing rollers (101, 103) for spreading evenly the main culture substratum (3) contained in the feed hopper (148), first and second stamping rollers (118, 129) being able to be placed in contact with the soil respectively behind the first and second transport bearing rollers (101, 103), for applying to the soil said first and second films (117, 126), a sealing device (141, 142, 144, 145) arranged in the vicinity of the second stamping roller (129) to make fast the longitudinal edges of the first and second films (117, 126) applied to the soil, and a sowing device (135, 137, 138, 146) arranged in the vicinity of the second stamping roller (129) to deposit on the soil therebehind both seed grains or cuttings and an additional semi-liquid culture substratum (4).

19. Installation according to claim 18, characterized in that it further comprises a third means (122) for supporting a roll (121) of a third film (123) placed in the vicinity of said first means (116) for supporting a roll (115) to enable the continuous application of a third film (123) applied onto said first film (117).

20. Installation according to claim 19, characterized in that the first stamping roller (118) is mounted on an arm articulated so as to be placed selectively in contact with the soil and is mounted in such way as to ensure simultaneous application to the soil of the first and second films (117, 123).

21. Installation according to any one of claims 18 to 20, characterized in that the means (105, 111 to 114) for spreading the main culture substrate (3) comprise a drum (105) driven synchronously with the first transport bearing roller (101), placed parallel to the bearing rollers (101, 103) below the feed hopper (148) and provided with angle irons (107) for applying, in cooperation with a lower plate (112) positionally adjustable with respect to the feed hopper (148), a predetermined flow rate for the main culture substratum (3) as a function of the forward speed defined by the bearing rollers (101, 103) in an inclined spreading plate (113) located below the drum (105) and provided with a reciprocating movement.

22. Installation according to claim 21, characterized in that the spreading means (105, 111 to 114) further comprise a flexible scraper (111) bearing on the angle irons of the drum (10) in the upper part thereof to ensure both sealing tightness of the hopper (148), cleaning of the angle irons (107) and elimination of arching effects in the hopper (148).

23. Installation according to any one of claims 18 to 22, characterized in that the sowing device (135, 137, 138, 146) comprises a reservoir and a seed grain or cutting application device (146) and a semi-liquid culture substratum feed device (4) comprising a peristaltic pump (135) associated with the forward speed of the first and second transport bearing rollers (101, 103) for applying an even quantity of additional semi-liquid substratum to an expansion box (138) placed behind the second stamping roll (129) and comprising an outlet orifice cooperating with a flexible blade (139).

24. Installation according to any one of claims 18 to 23, characterized in that the second stamping roller (129) and at least part of the sowing device (138, 139, 146) are mounted on an articulated frame (130) enabling selective contact of the second stamping roller (129) with the soil.

25. Installation according to any one of claims 18 to 24, characterized in that the sealing device comprises a reservoir of adhesive (141), a pump (142) and tubes (145) for applying strands of adhesive on at least one of the films (117, 123) deposited in a continuous manner on the soil, and small additional lateral stamping rollers (22) for applying the films (117, 123, 126) one on top of the other at the level of the strands of adhesive.

26. Installation according to any one of claims 18 to 25, characterized in that it further comprises a heating element device (120) for transversely cutting the films (117, 123, 126) deposited at end of stroke of the machine (100).

27. Installation according to any one of claims 18 to 26, characterized in that the first transport bearing roller (101) is slightly wider than the second transport bearings roller (103).

28. Installation according to any one of claims 18 to 27, characterized in that it comprises a trailer (200) driven simultaneously with said mobile machine (100) so as to contain a main compartment for storing the main culture substratum (3), a main storage reservoir (209) for the additional culture substratum (4) in the semi-liquid state, a fertilizer reservoir (206) and selective main culture substratum feed means of the hopper (148) of said mobile machine (100) controlled as a function of a filling detection device of the feed hopper (148).

## Patentansprüche

1. Verfahren zur industriellen Herstellung erdloser Pflanzenkulturen, dadurch gekennzeichnet, daß es folgende Schritte umfaßt:
1°) Herstellung einer Endloshülse (2) am Boden, die ein Kultursubstrat (3) umschließt, das aus genau abgemessenen Teilchen besteht, indem nacheinander mindestens ein erster Film (1) aus für Wurzeln undurchdringlichem Kunststoff, eine Schicht des Kultursubstrats (3) einer vorbestimmten Dicke und von geringerer Breite als der erste Film (1) und mindestens ein zweiter Film (6), der breiter ist als die Schicht Kultursubstrat (3), auf den Boden aufgebracht werden, und indem dafür gesorgt wird, daß bei der Herstellung der Hülse (13) die Längsränder des ersten und zweiten Films (1, 6) fortlaufend durch Kleben oder Schweißen fest miteinander verbunden werden,
2°) Aufbringen einer Saat aus Samen oder Setzlingen und eines sehr feuchten, einen halbflüssigen Schlamm bildenden zusätzlichen Kultursubstrats (4) auf die Hülse (13),
3°) Wachsenlassen der Pflanzen (8) bei Bewässerung und eventuell Zugabe von Nährlösungen,
4°) Abnehmen der Kulturhülse nach dem Wachsen der Pflanzen (8) als Platten oder Rolle, und
5°) Schneiden und Verpacken der die Pflanzen enthaltenden Kulturhülsenstücke (8).

2. Verfahren nach Anspruch 1, dadurch gekennzeichnet, daß bei der Herstellung der Hülse (13) auf den ersten Film (1) aus für Wurzeln undurchdringlichem Kunststoff vor dem Aufbringen einer Kultursubstratschicht (3) ein dritter Film (2) aus einem feinmaschigen, nichtgewebten, für Wurzeln durchdringbaren Stoff aufgebracht wird, der breiter ist als die Kultursubstratschicht (3), und daß bei der Herstellung der Hülse (13) die Längsränder des zweiten und dritten Films (6, 2) fortlaufend durch Kleben oder Schweißen fest miteinander verbunden werden.

3. Verfahren nach Anspruch 1 oder 2, dadurch gekennzeichnet, daß der zweite Film (6) aus nichtgewebtem, feinmaschigen, für Wurzeln durchdringbaren Stoff besteht.

4. Verfahren nach einem der Ansprüche 1 bis 3, dadurch gekennzeichnet, daß das sehr feuchte zusätzliche Kultursubstrat (4) fortlaufend aufgebracht wird.

5. Verfahren nach einem der Ansprüche 1 bis 4, dadurch gekennzeichnet, daß die Samen oder Setzlinge dem zusätzlichen Kultursubstrat (4) vor dem Ausstreuen beigemischt werden.

6. Verfahren nach einem der Ansprüche 1 bis 4, dadurch gekennzeichnet, daß die Samen oder Setzlinge vor oder nach dem Ausstreuen des zusätzlichen Kultursubstrats (4) getrennt von diesem auf die Hülse (13) aufgebracht werden.

7. Verfahren nach einem der Ansprüche 1 bis 6, dadurch gekennzeichnet, daß der erste Film (1) ein Film aus wasserdurchlässigem Kunststoff wie ein mikroperforierter Film ist.

8. Verfahren nach Anspruch 1, dadurch gekennzeichnet, daß der Film (6) ein Kunststoffilm ist, in den vor dem Aufbringen der Saat Öffnungen oder Löcher gearbeitet werden.

9. Verfahren nach einem der Ansprüche 1 bis 8, dadurch gekennzeichnet, daß das Kultursubstrat (3) aus genau abgemessenen Teilchen aus mindestens einem der folgenden Stoffe besteht: gehäckselter Rinde, Torf, Vermiculit, Sägespänen, humusreichem Boden, Gesteinsfaser.

10. Verfahren nach einem der Ansprüche 1 bis 9, dadurch gekennzeichnet, daß das zusätzliche Kultursubstrat (4) aus fein gehäckseltem und vor dem Ausstreuen befeuchteten Stichtorf besteht.

11. Verfahren nach einem der Ansprüche 1 bis 10, dadurch gekennzeichnet, daß die Schicht zusätzlichen Kultursubstrats (4) eine mittlere Dicke zwischen etwa 15 mm und 50 mm aufweist.

12. Verfahren nach einem der Ansprüche 1 bis 11, dadurch gekennzeichnet, daß die im halbflüssigen Zustand ausgestreute Schicht zusätzlichen Kultursubstrats (4) eine mittlere Dicke zwischen 2 mm und 5 mm aufweist.

13. Verfahren nach einem der Ansprüche 1 bis 12, dadurch gekennzeichnet, daß es die gleichzeitige Bildung mehrerer paralleler, voneinander beabstandeter Streifen der Schicht zusätzlichen Kultursubstrats (4) auf einer einzigen Hülse (13) umfaßt.

14. Verfahren nach Anspruch 13, dadurch gekennzeichnet, daß eine Schicht Kultursubstrat (3) etwa zwischen 0,50 m und 1,00 m breit ist, während eine Schicht zusätzlichen Kultursubstrats (4) etwa zwischen 6 cm und 10 cm breit ist.

15. Verfahren nach den Ansprüchen 2 und 3, dadurch gekennzeichnet, daß beim Abnehmen der erste Kunststoffilm (1) an Ort und Stelle gelassen wird, während die aus dem zweiten und dritten Film (6, 2) aus nichtgewebtem Material bestehende Hülse (13), welche die Kultursubstratschicht (3) umschließt, in welche die Wurzeln (9) der Pflanzen (8) eingedrungen sind, als Platte oder Rolle abgenommen wird.

16. Verfahren nach einem der Ansprüche 1 bis 15, dadurch gekennzeichnet, daß es auf die Kultur von Saat- oder Setzlingspflanzen angewandt wird, insbesondere von Blumen und Gewürzpflanzen wie Petersilie, Kerbel und Schnittlauch.

17. Verfahren nach einem der Ansprüche 1 bis 16, dadurch gekennzeichnet, daß die gesäten oder gesetzten Pflanzen, deren Wurzeln in eine Schicht Hauptkultursubstrat (3) aus genau abgemessenen, zwischen dem unteren Film (2) und dem oberen Film (6) eingeschlossenen Teilchen aus nichtgewebtem, feinmaschigen Material eingedrungen sind, in einem kahnförmigen Gefäß aufbewahrt werden.

18. Vorrichtung zur Anwendung des Verfahrens nach einem der Ansprüche 1 bis 16, dadurch gekennzeichnet, daß sie eine bewegliche Maschine (100) umfaßt, die ein Gehäuse aufweist, das auf eine erste und eine zweite Antriebswalze (101, 103) montiert ist, die parallel zueinander angeordnet sind, auf dem Boden aufliegen und den gleichen Durchmesser haben, sowie eine erste Trägervorrichtung (116) für eine Rolle (115) eines ersten Films (117) nahe der ersten Antriebsträgerwalze (101), eine zweite Trägervorrichtung (125) für eine Rolle (124) eines zweiten Films (126) nahe der zweiten Antriebsträgerwalze (103), einen zwischen der ersten und der zweiten Antriebsträgerwalze (101, 103) angeordneten Beschicktrichter (148) zur Aufgabe des Hauptkultursubstrats (3), Vorrichtungen (105, 111, 112, 113, 114), die synchron zur Vorwärtsbewegung der ersten und zweiten Antriebsträgerwalze (101, 103) arbeiten, um das in dem Beschicktrichter (148) enthaltene Hauptkultursubstrat (3) in regulierter Weise auszustreuen, eine erste und eine zweite Glattwalze (118, 129), die mit dem Boden in Kontakt gebracht werden können und jeweils hinter der ersten bzw. der zweiten Antriebsträgerwalze (101, 103) angeordnet sind, um den ersten und zweiten Film (117, 126) auf den Boden zu drücken, eine nahe der zweiten Glattwalze (129) angeordnete Versiegelungsvorrichtung (141, 142, 144, 145) zum festen Verbinden der Längsränder des ersten und zweiten, auf den Boden gedrückten Films (117, 126), und eine Sävorrichtung (135, 137, 138, 146), die nahe der zweiten Glattwalze (129) angeordnet ist, um hinter dieser gleichzeitig Samen oder Setzlinge und ein halbflüssiges zusätzliches Kultursubstrat (4) auf den Boden zu bringen.

19. Vorrichtung nach Anspruch 18, dadurch gekennzeichnet, daß sie außerdem eine dritte Trägervorrichtung (122) für eine Rolle (121) für einen dritten Film (123) aufweist, die nahe dem ersten Träger (116) einer Rolle (115) angeordnet ist, zum fortlaufenden Aufbringen eines dritten, über dem ersten Film (117) angeordneten Films (123) auf den Boden.

20. Vorrichtung nach Anspruch 19, dadurch gekennzeichnet, daß die erste Glattwalze (118) auf einen Schwenkarm montiert ist, um selektiv in Kontakt mit dem Boden gebracht werden zu können, und so angebracht ist, daß sie gleichzeitig den ersten und dritten Film (117, 123) auf den Boden drücken kann.

21. Vorrichtung nach einem der Ansprüche 18 bis 20, dadurch gekennzeichnet, daß die Vorrichtungen (105, 111-114) zum Ausstreuen des Hauptkultursubstrats (3) eine Rolle (105) umfassen, die parallel zu den Trägerwalzen (101, 103) unter dem Beschicktrichter (148) angeordnet ist und synchron zur ersten Antriebsträgerwalze (101) angetrieben wird und mit Winkeln (107) versehen ist, die in Abhängigkeit von der von den Trägerwalzen (101, 103) bestimmten Vortriebsgeschwindigkeit zusammen mit einer unteren Platte (112), deren Stellung bezüglich dem Beschicktrichter (148) verstellbar ist, eine vorbestimmte Menge Hauptkultursubstrat (3) auf eine unter der Rolle (105) angeordnete, geneigte Ausstreuplatte (113) aufbringt, die sich hin- und herbewegt.

22. Vorrichtung nach Anspruch 21, dadurch gekennzeichnet, daß die Vorrichtungen (105, 111-114) zum Ausstreuen außerdem einen biegsamen Rakel (111) umfassen, der auf den Winkeln der Rolle (105) in deren oberen Bereich aufliegt, um gleichzeitig den Beschicktrichter (148) abzudichten, die Winkel (107) zu reinigen und Wölbungseffekte im Beschicktrichter (148) zu verhindern.

23. Vorrichtung nach einem der Ansprüche 18 bis 22, dadurch gekennzeichnet, daß die Sävorrichtung (135, 137, 138, 146) einen Vorratsbehälter und eine Ausbringvorrichtung für die Samen oder Setzlinge (146) sowie eine Beschickvorrichtung für das halbflüssige zusätzliche Kultursubstrat (4) aufweist, die eine peristaltische Pumpe (135) umfaßt, die auf die Vortriebsgeschwindigkeit der ersten und zweiten Antriebsträgerwalze (101, 103) abgestimmt ist, um eine geregelte Menge halbflüssigen zusätzlichen Kultursubstrats in eine Volumenminderungsbüchse (138) einzubringen, die sich hinter der zweiten Glattwalze (129) befindet und eine Austrittsöffnung aufweist, die mit einer biegsamen Zunge (139) zusammenwirkt.

24. Vorrichtung nach einem der Ansprüche 18 bis 23, dadurch gekennzeichnet, daß die zweite Glattwalze (129) und zumindest ein Teil der Saatvorrichtung (138, 139, 146) an einen Schwenkrahmen (130) montiert sind, der den Kontakt der zweiten Glattwalze (129) mit dem Boden selektiv zuläßt.

25. Vorrichtung nach einem der Ansprüche 18 bis 24, dadurch gekennzeichnet, daß die Versiegelungsvorrichtung einen Vorratsbehälter (141) für Kleber, eine Pumpe (142) und Rohre (145) zum Aufbringen von Klebesträngen auf mindestens einen der Filme (117, 123), die fortlaufend auf den Boden aufgebracht werden, sowie kleine zusätzliche, seitliche Glattwalzen (22) zum Drücken der Filme (117, 123, 126) aufeinander in Höhe dar Klebestränge aufweist.

26. Vorrichtung nach einem der Ansprüche 18 bis 25, dadurch gekennzeichnet, daß sie außerdem eine Vorrichtung mit Heizwiderstand (120) zum Querabschneiden der am Streckenende der Maschine (100) aufgebrachten Filme (117, 123, 126) aufweist.

27. Vorrichtung nach einem der Ansprüche 18 bis 26, dadurch gekennzeichnet, daß die erste Antriebsträgerwalze (101) geringfügig größer als die zweite Antriebsträgerwalze (103) ist.

28. Vorrichtung nach einem der Ansprüche 18 bis 27, dadurch gekennzeichnet, daß sie einen Anhänger (200) aufweist, der simultan zur mobilen Maschine (110) angetrieben wird und ein Hauptvorratsfach für das Hauptkultursubstrat (3), einen Hauptvorratsbehälter (209) für das zusätzliche Kultursubstrat (4) in halbflüssigem Zustand, einen Düngemittelbehälter (206) und Vorrichtungen zur selektiven Beschickung des Trichters (148) der beweglichen Maschine (100) mit Hauptkultursubstrat (3) aufweist, die abhängig von einer Vorrichtung (110, 149) gesteuert werden, mit, welcher der Füllstand des Beschicktrichters (148) gemessen wird.
